# FASCICULE DE BREVET EUROPEEN

(11) **EP 3 188 320 B1**
(45) Date de publication et mention de la délivrance du brevet: **04.09.2019**
(21) Numéro de dépôt: 16204946.4
(22) Date de dépôt: 19.12.2016
(51) Int. Cl.: H01R 12/70, G01R 31/28, H01R 13/516, H01R 13/60, H01R 13/74, H01R 25/00, H05K 13/04, H04L 12/28

(54) **DISPOSITIF DE MONTAGE DESTINE A MONTER UN CONNECTEUR DE TRAVERSEE DE CLOISON SUR UN SUPPORT ET PROCÉDÉ DE FABRICATION D'UN ÉQUIPEMENT ÉLECTRIQUE FAISANT USAGE DUDIT DISPOSITF**
MONTAGEVORRICHTUNG ZUM MONTIEREN EINES WANDDURCHFÜHRUNGSANSCHLUSSES AUF EINE HALTERUNG UND VERFAHREN ZUR HERSTELLUNG EINER ELEKTRISCHEN APPARATUR MIT DIESER MONTAGEVORRICHTUNG
MOUNTING DEVICE INTENDED FOR MOUNTING A CONNECTOR PASSING THROUGH A WALL ON A SUPPORT AND PROCESS OF FABRICATION OF AN ELECTRICAL EQUIPMENT USING SAID MOUNTING DEVICE

(30) Priorité: 28.12.2015 FR 1563374
(43) Date de publication de la demande: 05.07.2017
(73) Titulaire: SAGEMCOM BROADBAND SAS, 92500 Rueil Malmaison (FR)
(72) Inventeur: KOHN, Stéphane, 92500 RUEIL MALMAISON (FR)
(74) Mandataire: Lavaud, Thomas

(56) Documents cités:
- WO-A1-2007/110159
- US-A1- 2010 277 197
- US-B1- 6 238 242

## Description

L'invention concerne le domaine des équipements électriques de type passerelle résidentielle comportant une interface de communication par fibre optique.

### ARRIERE PLAN DE L'INVENTION

On assiste actuellement à un déploiement massif de réseaux de fibres optiques par les opérateurs internet, grâce auxquels les abonnés bénéficient d'un débit de données très important.

Les fabricants de passerelles résidentielles doivent intégrer dans les passerelles résidentielles des interfaces de communication par fibre optique qui permettent de relier les passerelles résidentielles aux réseaux de fibres optiques.

Cette intégration pose un certain nombre de difficultés. L'une de ces difficultés concerne la fabrication des passerelles résidentielles, et, plus particulièrement, certaines opérations effectuées lors d'une étape de test et lors d'une étape d'assemblage final réalisées au cours de la fabrication des passerelles résidentielles.

Pour tester une passerelle résidentielle, il convient classiquement de fixer un premier connecteur de traversée de cloison sur une carte électrique de la passerelle résidentielle qui comporte une interface de communication par fibre optique (fixation par soudage ou bien fixation mécanique via un vissage par exemple), de raccorder une première extrémité d'un câble de fibre optique au premier connecteur de traversée de cloison, de connecter une deuxième extrémité du câble de fibre optique à la carte électrique, de connecter un équipement de test au premier connecteur de traversée de cloison, puis de tester la carte électrique.

Lorsque la carte électrique a été testée avec succès, il convient ensuite de déconnecter le câble de fibre optique du premier connecteur de traversée de cloison, de démonter le premier connecteur de traversée de cloison de la carte électrique, de monter le premier connecteur de traversée de cloison sur un fond du boîtier de la passerelle résidentielle, puis enfin de raccorder la première extrémité du câble de fibre optique au premier connecteur de traversée de cloison. La carte électrique est alors fixée au boîtier, et le boîtier est refermé.

Alternativement, il est possible de conserver le premier connecteur de traversée de cloison sur la carte électrique après le test de celle-ci, et de monter un deuxième connecteur de traversée de cloison sur le boîtier pour y raccorder la première extrémité du câble de fibre optique.

Ces opérations sont, d'une part, relativement coûteuses, et d'autre part, relativement complexes à effectuer, du fait de la fragilité du câble de fibre optique et des risques d'endommagement du câble de fibre optique lors de sa manipulation.

Le document US6238242 B1 dévoile un dispositif de montage d'un connecteur au niveau d'une ouverture d'une cloison dans lequel la manipulation dudit dispositif nécessite une pression sur des pattes de blocage disposées dans le prolongement d'un corps contenant ledit connecteur.

### OBJET DE L'INVENTION

L'invention a pour objet de réduire le coût et la complexité de la fabrication d'un équipement électrique de type passerelle résidentielle qui comporte une interface de communication par fibre optique.

### RESUME DE L'INVENTION

En vue de la réalisation de ce but, on propose un dispositif de montage tel que décrit dans la revendication 1.

L'utilisation du dispositif de montage de l'invention permet de monter et de démonter manuellement le connecteur de traversée de cloison sur un support.

Ainsi, lors de la fabrication d'une passerelle résidentielle telle que celle évoquée plus tôt, un opérateur raccorde une première extrémité d'un câble de fibre optique à un connecteur de traversée de cloison, connecte une deuxième extrémité du câble de fibre optique à une carte électrique de la passerelle résidentielle, insère le connecteur de traversée de cloison dans le dispositif de montage de l'invention, monte manuellement le dispositif de montage de l'invention sur la carte électrique, puis teste la carte électrique. Une fois les tests réalisés, l'opérateur démonte manuellement le dispositif de montage de l'invention de la carte électrique et le monte manuellement sur un boîtier de la passerelle résidentielle. Il ne lui est donc pas nécessaire de déconnecter la première extrémité du câble de fibre optique du connecteur de traversée de cloison.

Un unique connecteur de traversée de cloison est donc utilisé pour fabriquer la passerelle résidentielle, ce qui réduit le coût de celle-ci.

Le transfert du connecteur de traversée de cloison entre la carte électrique et le boîtier est réalisé via un démontage puis un remontage manuels du dispositif de montage de l'invention, qui sont des opérations simples, rapides et peu coûteuses. De plus, comme le câble de fibre optique n'est pas déconnecté du connecteur de traversée de cloison, les manipulations du câble de fibre optique sont limitées et les risques d'endommager le câble de fibre optique sont réduits.

L'invention concerne également un équipement électrique de type passerelle résidentielle et un procédé de fabrication d'un tel équipement électrique.

D'autres caractéristiques et avantages de l'invention ressortiront à la lecture de la description qui suit de modes de réalisation particuliers, non limitatifs de l'invention.

### BREVE DESCRIPTION DES DESSINS

Il sera fait référence aux dessins annexés parmi lesquels :
- la figure 1 est une vue en perspective et de face du dispositif de montage selon un premier mode de réalisation de l'invention, dans lequel est intégré un connecteur de traversée de cloison ;
- la figure 2 est une vue en perspective et de derrière du dispositif de montage selon le premier mode de réalisation de l'invention (sans le connecteur de traversée de cloison) ;
- la figure 3 est une vue en perspective et de dessous du dispositif de montage selon le premier mode de réalisation de l'invention ;
- la figure 4 est une vue en perspective et de face du dispositif de montage selon le premier mode de réalisation de l'invention (l'orientation de la vue est différente de celle de la figure 1) ;
- la figure 5 est une vue partielle d'une carte électrique sur laquelle est monté le dispositif de montage selon le premier mode de réalisation de l'invention ;
- la figure 6 est une figure analogue à la figure 5, dans laquelle la carte électrique est orientée différemment ;
- la figure 7 représente une passerelle résidentielle en cours de fabrication dans laquelle est intégré le dispositif de montage selon le premier mode de réalisation de l'invention, le dispositif de montage selon le premier mode de réalisation de l'invention étant positionné sur une carte électrique de la passerelle résidentielle ;
- la figure 8 est une vue analogue à celle de la figure 7, dans laquelle le dispositif de montage selon le premier mode de réalisation de l'invention est positionné dans le fond d'un boîtier de la passerelle résidentielle ;
- la figure 9 est une vue de détail de la figure 8, qui illustre le dispositif de montage de l'invention selon le premier mode de réalisation de l'invention ;
- la figure 10 est une vue en perspective et de face du dispositif de montage selon un deuxième mode de réalisation de l'invention, dans lequel est intégré un connecteur de traversée de cloison ;
- la figure 11 est une vue en perspective et de derrière du dispositif de montage selon le deuxième mode de réalisation de l'invention (sans le connecteur de traversée de cloison) ;
- la figure 12 est une vue en perspective et de dessous du dispositif de montage selon le deuxième mode de réalisation de l'invention ;
- la figure 13 est une vue en perspective et de face du dispositif de montage selon le deuxième mode de réalisation de l'invention.

### DESCRIPTION DETAILLEE DE L'INVENTION

Le dispositif de montage selon un premier mode de réalisation de l'invention est ici utilisé pour monter un connecteur de traversée de cloison dans une passerelle résidentielle qui comporte une interface de communication par fibre optique.

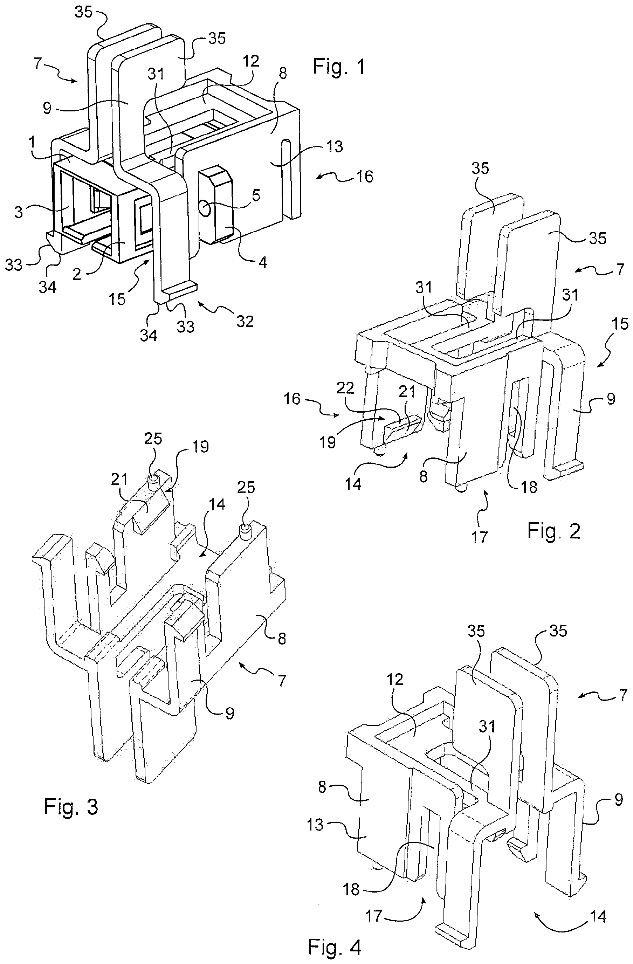

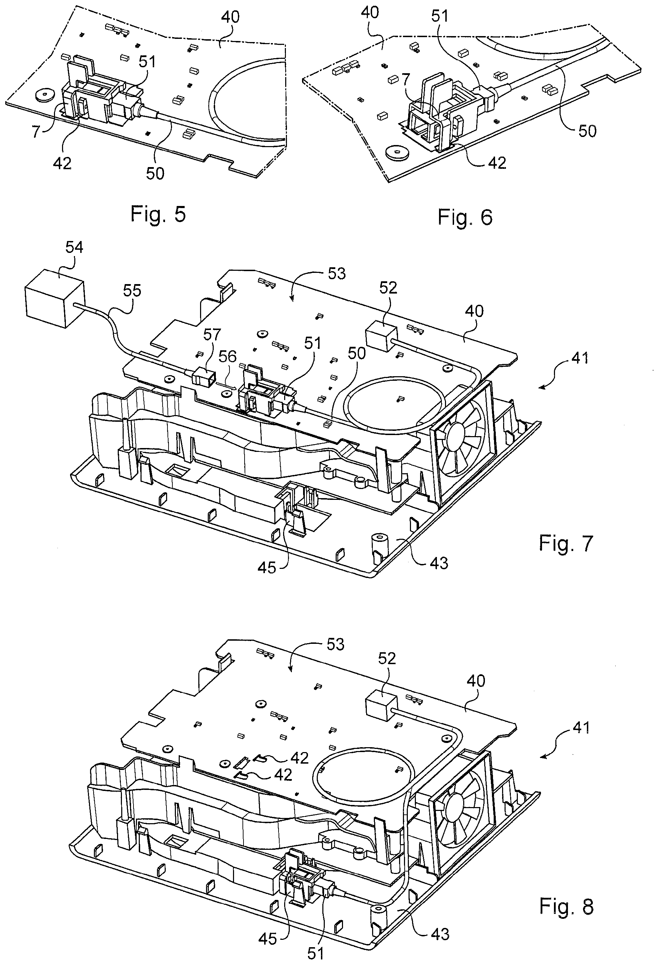

En référence à la figure 1, le connecteur de traversée de cloison 1 utilisé ici est un composant préexistant qui est destiné à aligner et à connecter entre eux deux connecteurs homologues de fibre optique de part et d'autre d'une cloison (de tels connecteurs homologues de fibre optique 51 et 57 sont visibles sur la figure 7).

Le connecteur de traversée de cloison 1 comporte un corps 2 de forme extérieure générale parallélépipédique, deux orifices de connexion 3 formant deux interfaces de connexion femelles destinées chacune à accueillir l'un des deux connecteurs homologues de fibre optique, et deux pattes de fixation 4 qui sont habituellement utilisées pour fixer un tel connecteur de traversée de cloison 1 à une cloison.

On note que chaque patte de fixation 4 comporte un trou de fixation 5, les trous de fixation 5 n'étant pas utilisés ici du fait des caractéristiques de l'invention qui vont être décrites dans ce qui suit.

En référence aux figures 1 à 4, le dispositif de montage selon le premier mode de réalisation de l'invention 7 comporte une enveloppe creuse 8 et deux pattes d'accrochage flexibles 9.

L'enveloppe creuse 8 comprend une paroi supérieure 12 partiellement ouverte et deux parois latérales 13 qui définissent un logement 14 destiné à accueillir le connecteur de traversée de cloison 1. Le logement 14 présente une forme intérieure générale parallélépipédique.

Le logement 14 présente une première ouverture au niveau d'une première extrémité 15 de l'enveloppe creuse 8, une deuxième ouverture au niveau d'une deuxième extrémité 16 de l'enveloppe creuse 8, et une troisième ouverture au niveau d'un fond 17 de l'enveloppe creuse 8 (c'est-à-dire en face d'une face interne de la paroi supérieure 12 de l'enveloppe creuse 8).

L'enveloppe creuse 8 comporte deux fentes 18 ménagées chacune dans l'une des parois latérales 13 de l'enveloppe creuse 8. Chaque fente 18 s'étend selon une hauteur de la paroi latérale 13 depuis le fond de l'enveloppe creuse 8 et à proximité de la première extrémité 15 de l'enveloppe creuse 8.

Chaque paroi latérale 13 comprend une nervure 19 saillant à l'intérieur du logement 14. Chaque nervure 19 s'étend selon une longueur de la paroi latérale 13 à proximité de la troisième ouverture au niveau du fond 17 de l'enveloppe creuse 8. Chaque nervure 19 comprend une surface inclinée 21 et une surface plane 22 normale à la paroi latérale 13.

Pour positionner le connecteur de traversée de cloison 1 dans le logement 14 du dispositif de montage selon le premier mode de réalisation de l'invention 7, il convient d'insérer le connecteur de traversée de cloison 1 dans la troisième ouverture au niveau du fond 17 de l'enveloppe creuse 8 tout en introduisant les pattes de fixation 4 du connecteur de traversée de cloison 1 dans les fentes 18 des parois latérales 13 de l'enveloppe creuse 8. L'insertion du connecteur de traversée de cloison 1 est facilitée par les surfaces inclinées 21 des deux nervures 19. Le connecteur de traversée de cloison 1 est maintenu en position dans le logement 14 par encliquetage de son corps 2 avec les nervures 19 et grâce à la position des pattes de fixation 4 dans les fentes 18.

L'enveloppe creuse 8 comporte de plus deux pions de centrage 25 destinés à assurer un positionnement correct du dispositif de montage selon le premier mode de réalisation de l'invention 7 sur un support tel qu'une carte électrique ou un boîtier sur lequel le dispositif de montage selon le premier mode de réalisation de l'invention 7 est monté. Chaque pion de centrage 25 s'étend dans le prolongement de l'une des parois latérales 13 de sorte que, lorsque le dispositif de montage selon le premier mode de réalisation de l'invention 7 est posé sur le support, les pions de centrage 25 soient introduits dans des orifices de centrage ménagés dans le support.

Lorsque le connecteur de traversée de cloison 1 est positionné dans le dispositif de montage selon le premier mode de réalisation de l'invention 7, l'un des orifices de connexion 3 du connecteur de traversée de cloison 1 débouche au niveau de la première ouverture du logement 14 et l'autre des orifices de connexion 3 du connecteur de traversée de cloison 1 débouche au niveau de la deuxième ouverture du logement 14. La première ouverture et la deuxième ouverture du logement 14 permettent ainsi un raccordement des deux connecteurs homologues de fibre optique au connecteur de traversée de cloison 1.

Les deux pattes d'accrochage flexibles 9 sont reliées à la paroi supérieure 12 de l'enveloppe creuse 8 du dispositif de montage selon le premier mode de réalisation de l'invention 7 grâce à deux languettes flexibles 31 qui s'étendent au niveau de la paroi supérieure 12 selon la longueur de l'enveloppe creuse 8.

Chaque patte d'accrochage 9 est munie à une première extrémité libre d'un crochet 32 qui comporte une surface inclinée 33 et une surface plane 34 normale à une longueur de la patte d'accrochage 9. Les deux pattes d'accrochage 9 forment des moyens d'encliquetage.

Chaque patte d'accrochage 9 est munie à une deuxième extrémité libre d'une surface plane 35, les deux surfaces planes 35 étant positionnées en regard l'une de l'autre et parallèlement aux parois latérales 13 de l'enveloppe creuse 8 du dispositif de montage selon le premier mode de réalisation de l'invention 7.

Bien que flexibles, les deux pattes d'accrochage 9 présentent une rigidité supérieure à celle des languettes flexibles 31. Les deuxièmes extrémités libres des deux pattes d'accrochage 9 forment ainsi deux branches d'une pince. La pince est agencée de sorte que, lorsque les deux branches sont rapprochées manuellement en agissant sur les deux surfaces planes 35 des deux pattes d'accrochage 9, les premières extrémités libres sont rapprochées l'une de l'autre pour permettre un montage et un démontage manuels du dispositif de montage selon le premier mode de réalisation de l'invention 7.

En référence aux figures 5 et 6, le dispositif de montage selon le premier mode de réalisation de l'invention 7 est destiné tout d'abord à monter le connecteur de traversée de cloison 1 sur une carte électrique 40 de la passerelle résidentielle 41, ladite carte électrique 40 comprenant l'interface de communication par fibre optique.

Deux premiers orifices d'accueil 42 comportant des saillies d'accrochage sont ménagés à cet effet dans la carte électrique 40. Les premières extrémités libres des pattes d'accrochage 9 du dispositif de montage selon le premier mode de réalisation 7 sont adaptées à coopérer avec les saillies d'accrochage des deux premiers orifices d'accueil 42 pour encliqueter le dispositif de montage selon le premier mode de réalisation de l'invention 7 sur la carte électrique 40.

Ainsi, pour monter manuellement le dispositif de montage selon le premier mode de réalisation de l'invention 7 sur la carte électrique 40, on positionne le dispositif de montage selon le premier mode de réalisation de l'invention 7 sur la carte électrique 40 de manière à ce que les pions de centrage 25 pénètrent dans des orifices de centrage de la carte électrique 40, et on rapproche les deux surfaces planes 35 des deux pattes d'accrochage 9 pour rapprocher les deux premières extrémités libres des deux pattes d'accrochage 9 et pour permettre l'encliquetage. De même, pour démonter manuellement le dispositif de montage selon le premier mode de réalisation de l'invention 7 de la carte électrique 40, on rapproche les deux surfaces planes 35 des deux pattes d'accrochage 9 et on rapproche les deux premières extrémités libres des deux pattes d'accrochage 9 pour permettre le retrait du dispositif de montage selon le premier mode de réalisation de l'invention 7.

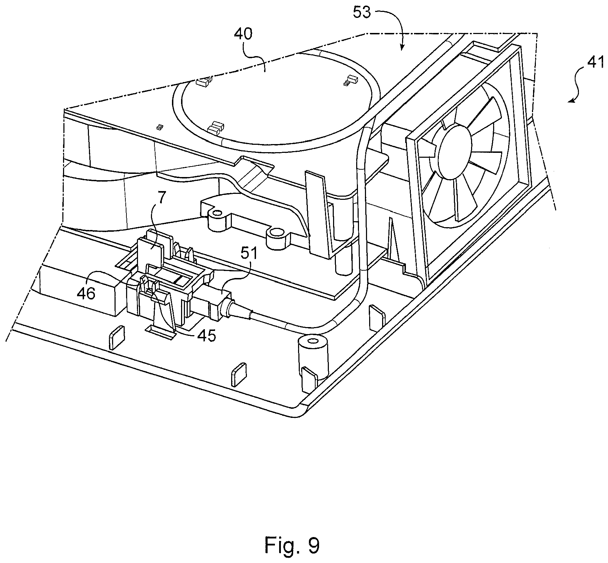

En référence aux figures 7 à 9, le dispositif de montage selon le premier mode de réalisation de l'invention 7 est aussi destiné à monter le connecteur de traversée de cloison 1 sur une face interne d'une paroi 43 formant un fond d'un boîtier de la passerelle résidentielle 41. La paroi 43 est munie à cet effet de deux deuxièmes orifices d'accueil semblables aux premiers orifices d'accueil 42 de la carte électrique 40, qui permettent l'encliquetage du dispositif de montage selon le deuxième mode de réalisation de l'invention 7 sur la paroi 43.

La paroi 43 formant un fond du boîtier est aussi munie de deux guides 45 positionnés de part et d'autre du dispositif de montage selon le premier mode de réalisation de l'invention 7 lorsque celui-ci est monté sur la paroi 43. Chaque guide 45 comporte deux surfaces en regard l'une de l'autre entre lesquelles est introduite l'une des deux pattes de fixation 4 du connecteur de traversée de cloison 1 lorsque celui-ci est monté dans le dispositif de montage selon le premier mode de réalisation de l'invention 7 et que le dispositif de montage selon le premier mode de réalisation de l'invention 7 est positionné sur la paroi 43. Chaque surface de chaque guide 45 comporte une surface inclinée 46 qui permet de faciliter l'insertion de la patte de fixation 4 dans le guide 45.

Les guides 45 permettent donc de guider le dispositif de montage selon le premier mode de réalisation de l'invention 7 lors de son installation sur la paroi 43, et de faciliter cette installation. Les guides 45 permettent aussi, lorsqu'un opérateur ou un utilisateur tire sur un câble de fibre optique 50 présentant à une première extrémité un connecteur homologue de fibre optique 51 inséré dans le connecteur de traversée de cloison 1, de transférer au boîtier via les pattes de connexion 4 et les guides 45 l'effort résultant de cette action de l'opérateur ou de l'utilisateur, et donc d'empêcher un arrachement du dispositif de montage selon le premier mode de réalisation de l'invention 7.

On décrit maintenant un procédé de fabrication de la passerelle résidentielle 41 qui utilise le dispositif de montage selon le premier mode de l'invention 7 qui vient d'être décrit.

La carte électrique 40, qui comporte l'interface de communication par fibre optique, est fournie à un opérateur. Le dispositif de montage selon le premier mode de réalisation de l'invention 7, dans lequel est introduit le connecteur de traversée de cloison 1, est monté sur la carte électrique 40. Le câble de fibre optique 50 accompagne la carte électrique 40. Le connecteur homologue de fibre optique 51 de la première extrémité du câble de fibre optique 50 a été préalablement connecté au connecteur de traversée de cloison 1. Une deuxième extrémité du câble de fibre optique 50 est connectée à un connecteur de fibre optique 52 monté sur une face supérieure 53 de la carte électrique 40.

L'opérateur connecte le connecteur de traversée de cloison 1 à un équipement de test 54 via un câble de fibre optique de test 55 (voir la flèche 56 sur la figure 7). Le câble de fibre optique de test 55 comporte à cet effet un connecteur homologue de fibre optique 57. L'opérateur teste alors l'interface de communication par fibre optique de la carte électrique 40.

Une fois que la carte électrique 40 a été testée avec succès, l'opérateur démonte manuellement le dispositif de montage selon le premier mode de réalisation 7 de la carte électrique 40, puis le monte manuellement sur la paroi 43 du boîtier de la passerelle résidentielle 41. Le câble de fibre optique 50 demeure connecté au connecteur de traversée de cloison 1 qui lui-même demeure inséré dans le dispositif de montage selon le premier mode de réalisation 7. La deuxième extrémité du câble de fibre optique 50 reste connectée au connecteur de fibre optique 52 monté sur la face supérieure 53 de la carte électrique 40

Puis, l'opérateur fixe la carte électrique 40 au boîtier de la passerelle résidentielle 41 et referme le boîtier.

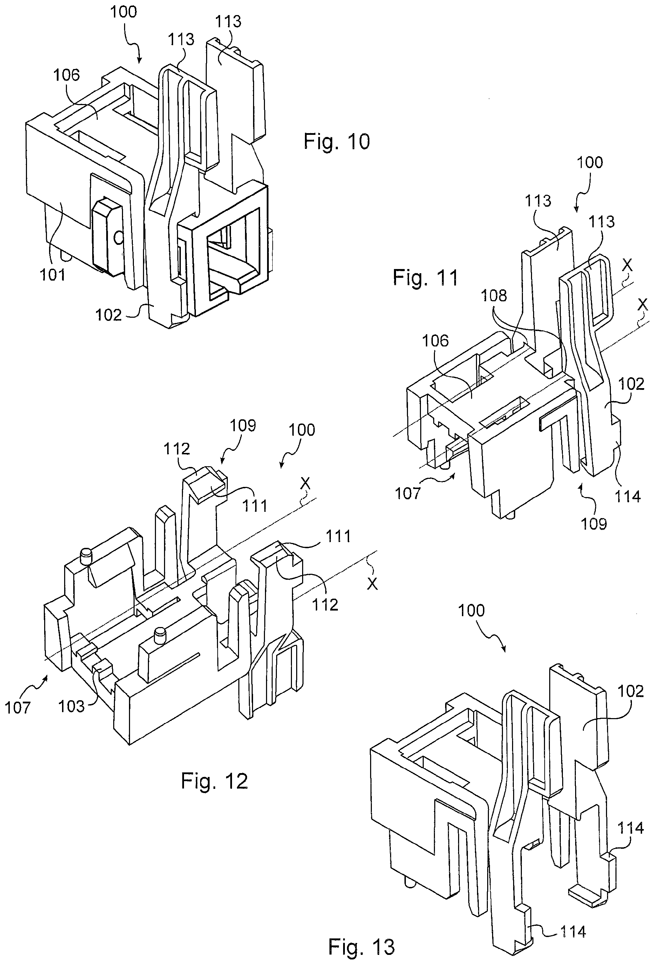

En référence aux figures 10 à 13, le dispositif de montage selon un deuxième mode de réalisation de l'invention 100 comporte à nouveau une enveloppe creuse 101 et deux pattes d'accrochage flexibles 102.

L'enveloppe creuse 101 comporte un pion de détrompage 103 destiné à éviter une erreur d'installation du connecteur de traversée de cloison dans le logement du dispositif de montage selon le deuxième mode de réalisation de l'invention 100. Le pion de détrompage 103 est situé au niveau de la face interne de la paroi supérieure 106 de l'enveloppe creuse 101 et à proximité d'une extrémité 107 de l'enveloppe creuse 101.

Chaque patte d'accrochage flexible 102 est reliée par une languette 108 relativement rigide à la paroi supérieure 106 de l'enveloppe creuse 101. La languette 108 autorise un léger pivotement de la patte d'accrochage 102 autour d'un axe X qui s'étend selon une longueur de la languette 108.

Chaque patte d'accrochage 102 est munie à une première extrémité libre d'un crochet interne 109 qui comporte une surface inclinée 111 et une surface plane 112 normale à une longueur de la patte d'accrochage 102. Les deux pattes d'accrochage 102 forment des moyens d'encliquetage.

Chaque patte d'accrochage 102 est munie à une deuxième extrémité libre d'une surface plane 113, les deux surfaces planes 113 étant positionnées en regard l'une de l'autre et parallèlement aux parois latérales de l'enveloppe creuse 101 du dispositif de montage selon le deuxième mode de réalisation de l'invention 100.

Les deuxièmes extrémités libres des deux pattes d'accrochage 102 forment deux branches d'une pince. La pince est agencée de sorte que, lorsque les deux branches sont rapprochées manuellement en agissant sur les deux surfaces planes 113 des deux pattes d'accrochage, les premières extrémités libres sont éloignées l'une de l'autre du fait du léger pivotement évoqué plus tôt pour permettre un montage et un démontage manuels du dispositif de montage selon le deuxième mode de réalisation de l'invention 100.

Chaque patte d'accrochage 102 comporte en outre, sur une partie inférieure de la patte d'accrochage 102, une butée anti-basculement 114. Les butées anti-basculement 114 permettent d'éviter un basculement du dispositif de montage selon le deuxième mode de réalisation 100 au niveau des pattes d'accrochage 102, et améliorent ainsi un maintien du dispositif de montage selon le deuxième mode de réalisation 100 sur son support (carte électrique, boîtier).

Bien entendu, l'invention n'est pas limitée aux modes de réalisation décrits mais englobe toute variante entrant dans le champ de l'invention telle que définie par les revendications.

Bien que l'on ait décrit ici que l'invention s'applique à une passerelle résidentielle, l'invention peut bien sûr être mise en oeuvre sur un équipement électrique différent qui comporte une interface de communication par fibre optique.

On note que la plupart des caractéristiques décrites ici en relation avec l'un des deux modes de réalisation du dispositif de montage de l'invention peuvent parfaitement être mises en oeuvre sur l'autre mode de réalisation. Ainsi, il possible par exemple de munir le dispositif de montage selon le premier mode de réalisation de l'invention de butées anti-basculement ou bien d'un pion de détrompage.

Bien que l'on ait indiqué que la deuxième extrémité du câble de fibre optique est connectée à un connecteur de fibre optique monté sur une face supérieure de la carte électrique, la deuxième extrémité du câble de fibre optique peut parfaitement être connectée à une face inférieure de la carte électrique.

## Revendications

1. Dispositif de montage destiné à monter un connecteur de traversée de cloison (1) sur un support, le dispositif de montage comportant :
- un logement (14) destiné à accueillir le connecteur de traversée de cloison, ledit logement étant défini par une enveloppe creuse (8, 101) comprenant une paroi supérieure (12, 106) et deux parois latérales (13), le logement comportant une ouverture permettant un raccordement d'un connecteur homologue (51) au connecteur de traversée de cloison ;
- des moyens d'encliquetage pour encliqueter le dispositif de montage au support, lesdits moyens d'encliquetage comportant deux pattes d'accrochage flexibles (9, 102), chaque patte d'accrochage étant munie à une première extrémité libre d'un crochet (32, 109), chaque patte d'accrochage étant reliée à la paroi supérieure de l'enveloppe creuse ;
- des moyens d'actionnement manuel coopérant avec les moyens d'encliquetage pour permettre un montage et un démontage manuel du dispositif de montage sur le support, lesdits moyens d'actionnement manuel comportant deux branches formant une pince, chaque branche comprenant une deuxième extrémité libre de l'une des deux pattes d'accrochage flexibles.

2. Dispositif de montage selon la revendication 1, dans lequel le support est une carte électrique (40) ou un boîtier (43).

3. Dispositif de montage selon la revendication 1, dans lequel la pince est agencée de sorte que, lorsque les deux branches sont rapprochées manuellement, les premières extrémités libres sont rapprochées l'une de l'autre pour permettre le démontage manuel du dispositif de montage.

4. Dispositif de montage selon la revendication 1, dans lequel la pince est agencée de sorte que, lorsque les deux branches sont rapprochées manuellement, les premières extrémités libres sont éloignées l'une de l'autre pour permettre le démontage manuel du dispositif de montage.

5. Dispositif de montage selon l'une des revendications précédentes, comportant deux fentes (18) dans lesquelles peuvent être introduites deux pattes de fixation (4) du connecteur de traversée de cloison.

6. Dispositif de montage selon l'une des revendications précédentes, comportant un pion de détrompage (103) destiné à éviter une erreur d'installation du connecteur de traversée de cloison dans le dispositif de montage.

7. Dispositif de montage selon l'une des revendications précédentes, comportant au moins un pion de centrage (25) destiné à assurer un positionnement correct du dispositif de montage sur le support.

8. Dispositif de montage selon l'une des revendications précédentes, comportant une butée anti-basculement (114) destinée à améliorer un maintien du dispositif de montage sur le support.

9. Equipement électrique comportant une carte électrique (40) comprenant une interface de communication par fibre optique, un boîtier, un connecteur de traversée de cloison, et un dispositif de montage selon l'une des revendications précédentes monté sur le boîtier et dans lequel est positionné le connecteur de traversée de cloison.

10. Equipement électrique selon la revendication 9, dans lequel le boîtier comporte deux guides (45) dans lesquels sont introduites deux pattes de fixation (4) du connecteur de traversée de cloison.

11. Procédé de fabrication d'un équipement électrique comportant une carte électrique (40) comprenant une interface de communication par fibre optique, un boitier, un connecteur de traversée de cloison, et dispositif de montage destiné à monter un connecteur de traversée de cloison (1) sur un support, le dispositif de montage comportant : un logement (14) destiné à accueillir le connecteur de traversée de cloison, ledit logement étant défini par une enveloppe creuse (8, 101) comprenant une paroi supérieure (12, 106) et deux parois latérales (13), le logement comportant une ouverture permettant un raccordement d'un connecteur homologue (51) au connecteur de traversée de cloison; des moyens d'encliquetage pour encliqueter le dispositif de montage au support, lesdits moyens d'encliquetage comportant deux pattes d'accrochage flexibles (9, 102), chaque patte d'accrochage étant munie à une première extrémité libre d'un crochet (32, 109), chaque patte d'accrochage étant reliée à la paroi supérieure de l'enveloppe creuse; des moyens d'actionnement manuel coopérant avec les moyens d'encliquetage pour permettre un montage et un démontage manuel du dispositif de montage sur le support, lesdits moyens d'actionnement manuel comportant deux branches formant une pince, chaque branche comprenant une deuxième extrémité libre de l'une des deux pattes d'accrochage flexibles, ledit dispositif de montage étant monté sur le boîtier et dans lequel est positionné le connecteur de traversée de cloison; ledit procédé, comportant les étapes :
- de connecter une extrémité d'un câble de fibre optique (50) au connecteur de traversée de cloison ;
- de connecter l'autre extrémité du câble de fibre optique (50) à la carte électrique ;
- d'introduire le connecteur de traversée de cloison dans le logement du dispositif de montage ;
- de monter le dispositif de montage sur la carte électrique ;
- de tester la carte électrique en connectant le connecteur de traversée de cloison à un équipement de test (54) ;
- de démonter le dispositif de montage de la carte électrique ;
- de monter le dispositif de montage sur le boîtier.

## Patentansprüche

1. Montagevorrichtung, die dazu bestimmt ist, einen Wanddurchführungsanschluss (1) an einer Halterung zu montieren, wobei die Montagevorrichtung umfasst:
- eine Aufnahme (14), die dazu bestimmt ist, den Wanddurchführungsanschluss aufzunehmen, wobei die genannte Aufnahme von einem Hohlgehäuse (8, 101) definiert ist, das eine obere Wand (12, 106) und zwei Seitenwände (13) umfasst, wobei die Aufnahme eine Öffnung umfasst, die eine Verbindung eines homologen Anschlusses (51) mit dem Wanddurchführungsanschluss ermöglicht;
- Rastmittel zum Einrasten der Montagevorrichtung an der Halterung, wobei die genannten Rastmittel zwei flexible Verankerungslaschen (9, 102) umfassen, wobei jede Verankerungslasche an einem ersten freien Ende mit einem Haken (32, 109) versehen ist, wobei jede Verankerungslasche mit der oberen Wand des Hohlgehäuses verbunden ist;
- Mittel zur manuellen Betätigung, die mit den Rastmitteln zusammenwirken, um eine Montage und eine manuelle Demontage der Montagevorrichtung an der Halterung zu ermöglichen, wobei die genannten Mittel zur manuellen Betätigung zwei Schenkel umfassen, die eine Zange bilden, wobei jeder Schenkel ein zweites freies Ende einer der beiden flexiblen Verankerungslaschen umfasst.

2. Montagevorrichtung nach Anspruch 1, bei der die Halterung eine elektrische Karte (40) oder ein Gehäuse (43) ist.

3. Montagevorrichtung nach Anspruch 1, bei der die Zange so ausgebildet ist, dass, wenn die beiden Schenkel manuell angenähert werden, die ersten freien Enden aneinander angenähert werden, um die manuelle Demontage der Montagevorrichtung zu ermöglichen.

4. Montagevorrichtung nach Anspruch 1, bei der die Zange derart ausgebildet ist, dass, wenn die beiden Schenkel manuell angenähert werden, die ersten freien Enden voneinander entfernt werden, um die manuelle Demontage der Montagevorrichtung zu ermöglichen.

5. Montagevorrichtung nach einem der vorhergehenden Ansprüche, umfassend zwei Schlitze (18), in die zwei Befestigungslaschen (4) des Wanddurchführungsanschlusses eingeführt werden können.

6. Montagevorrichtung nach einem der vorhergehenden Ansprüche, umfassend einen Kodierstift (103), der dazu bestimmt ist, einen Installationsfehler des Wanddurchführungsanschlusses in der Montagevorrichtung zu verhindern.

7. Montagevorrichtung nach einem der vorhergehenden Ansprüche, umfassend mindestens einen Zentrierstift (25), der dazu bestimmt ist, eine korrekte Positionierung der Montagevorrichtung an der Halterung zu gewährleisten.

8. Montagevorrichtung nach einem der vorhergehenden Ansprüche, umfassend einen Kippschutz (114), der dazu bestimmt ist, ein Halten der Montagevorrichtung an der Halterung zu verbessern.

9. Elektrisches Gerät, umfassend eine elektrische Karte (40), die eine Kommunikationsschnittstelle zur Kommunikation mittels Glasfaser umfasst, ein Gehäuse, einen Wanddurchführungsanschluss und eine Montagevorrichtung nach einem der vorhergehenden Ansprüche, die an dem Gehäuse montiert ist und in der der Wanddurchführungsanschluss positioniert ist.

10. Elektrisches Gerät nach Anspruch 9, bei dem das Gehäuse zwei Führungen (45) umfasst, in die zwei Befestigungslaschen (4) des Wanddurchführungsanschlusses eingeführt sind.

11. Verfahren zur Herstellung eines elektrischen Geräts, das eine elektrische Karte (40) umfasst, die eine Kommunikationsschnittstelle zur Kommunikation mittels Glasfaser umfasst, ein Gehäuse, einen Wanddurchführungsanschluss und eine Montagevorrichtung, die dazu bestimmt ist, einen Wanddurchführungsanschluss (1) an einer Halterung zu montieren, wobei die Montagevorrichtung umfasst: eine Aufnahme (14), die dazu bestimmt ist, den Wanddurchführungsanschluss aufzunehmen, wobei die genannte Aufnahme von einem Hohlgehäuse (8, 101) definiert ist, das eine obere Wand (12, 106) und zwei Seitenwände (13) umfasst, wobei die Aufnahme eine Öffnung umfasst, die eine Verbindung eines homologen Anschlusses (51) mit dem Wanddurchführungsanschluss ermöglicht; Rastmittel zum Einrasten der Montagevorrichtung an der Halterung, wobei die genannten Rastmittel zwei flexible Verankerungslaschen (9, 102) umfassen, wobei jede Verankerungslasche an einem ersten freien Ende mit einem Haken (32, 109) versehen ist, wobei jede Verankerungslasche mit der oberen Wand des Hohlgehäuses verbunden ist; Mittel zur manuellen Betätigung, die mit den Rastmitteln zusammenwirken, um eine Montage und eine manuelle Demontage der Montagevorrichtung an der Halterung zu ermöglichen, wobei die genannten Mittel zur manuellen Betätigung zwei Schenkel umfassen, die eine Zange bilden, wobei jeder Schenkel ein zweites freies Ende von einer der beiden flexiblen Verankerungslaschen umfasst, wobei die genannte Montagevorrichtung an dem Gehäuse montiert ist und in der der Wanddurchführungsanschluss positioniert ist; wobei das genannte Verfahren die Schritte umfasst:
- Verbinden eines Endes eines Glasfaserkabels (50) mit dem Wanddurchführungsanschluss;
- Verbinden des anderen Endes des Glasfaserkabels (50) mit der elektrischen Karte;
- Einführen des Wanddurchführungsanschlusses in die Aufnahme der Montagevorrichtung;
- Montieren der Montagevorrichtung an der elektrischen Karte;
- Testen der elektrischen Karte, indem der Wanddurchführungsanschluss an einem Testgerät (54) angeschlossen wird;
- Demontieren der Montagevorrichtung von der elektrischen Karte;
- Montieren der Montagevorrichtung an dem Gehäuse.

## Claims

1. A mounting device for mounting a bulkhead connector (1) on a support, the mounting device comprising:
• a housing (14) for receiving the bulkhead connector, said housing being defined by a hollow casing (8, 101) comprising a top wall (12, 106) and two side walls (13), the housing including an opening enabling a mating connector (51) to be connected to the bulkhead connector;
• snap-fastener means for snap-fastening the mounting device to the support, wherein the snap-fastener means comprise two flexible attachment tabs (9; 102), each attachment tab being provided at a first free end with a hook (32, 109), each attachment tab being connected to the top wall of the hollow casing ;
• manual actuator means co-operating with the snap-fastener means for making it possible, manually, to mount the mounting device on the support and to remove it therefrom, wherein the manual actuator means comprise two jaws forming a gripper, each jaw comprising a second free end of a respective one of the two flexible attachment tabs.

2. A mounting device according to claim 1, wherein the support is a circuit card (40) or a box (43).

3. A mounting device according to claim 1, wherein the gripper is arranged in such a manner that when the two jaws are moved manually towards each other, the first free ends are moved towards each other so as to enable the mounting device to be removed manually.

4. A mounting device according to claim 1, wherein the gripper is arranged in such a manner that when the two jaws are moved manually towards each other, the first free ends are moved apart from each other to enable the mounting device to be removed manually.

5. A mounting device according to any one of the preceding claims, including two slots (18) in which two fastener tabs (4) of the bulkhead connector can be inserted.

6. A mounting device according to any one of the preceding claims, including a keying peg (103) for avoiding the bulkhead connector being installed erroneously in the mounting device.

7. A mounting device according to any one of the preceding claims, including at least one centering peg (25) for ensuring that the mounting device is correctly positioned on the support.

8. A mounting device according to any one of the preceding claims, including an anti-tilting abutment (114) designed to improve the retention of the mounting device on the support.

9. Electrical equipment including a circuit card (40) comprising an optical fiber communications interface, a box, a bulkhead connector, and a mounting device according to any preceding claim mounted on the box and in which the bulkhead connector is positioned.

10. Electrical equipment according to claim 9, wherein the box has two guides (45) in which two fastener tabs (4) of the bulkhead connector are inserted.

11. A method of manufacturing an electrical equipment including a circuit card (40) comprising an optical fiber communications interface, a box, a bulkhead connector, and a mounting device for mounting a bulkhead connector (1) on a support, the mounting device comprising: • a housing (14) for receiving the bulkhead connector, said housing being defined by a hollow casing (8, 101) comprising a top wall (12, 106) and two side walls (13), the housing including an opening enabling a mating connector (51) to be connected to the bulkhead connector; snap-fastener means for snap-fastening the mounting device to the support, wherein the snap-fastener means comprise two flexible attachment tabs (9; 102), each attachment tab being provided at a first free end with a hook (32, 109), each attachment tab being connected to the top wall of the hollow casing ; manual actuator means co-operating with the snap-fastener means for making it possible, manually, to mount the mounting device on the support and to remove it therefrom, wherein the manual actuator means comprise two jaws forming a gripper, each jaw comprising a second free end of a respective one of the two flexible attachment tabs, said mounting device being mounted on the box and in which is located the bulkhead connector, said method comprising the following steps:
• connecting one end of an optical fiber cable (50) to the bulkhead connector;
• connecting the other end of the optical fiber cable (50) to the circuit card;
• inserting the bulkhead connector in the housing of the mounting device;
• mounting the mounting device on the circuit card;
• testing the circuit card by connecting the bulkhead connector to test equipment (54);
• removing the mounting device from the circuit card;
• mounting the mounting device on the box.
